# EUROPÄISCHE PATENTSCHRIFT

(11) **EP 1 269 832 B1**
(45) Veröffentlichungstag und Bekanntmachung des Hinweises auf die Patenterteilung: **27.10.2004**
(21) Anmeldenummer: 01114924.2
(22) Anmeldetag: 20.06.2001
(51) Int. Cl.: A01J 25/15, A01J 25/12

(54) **Verfahren zum Herstellen eines Käselaibes**
Device for making a cheese block
Dispositif de fabrication d'une meule de fromage

(43) Veröffentlichungstag der Anmeldung: 02.01.2003
(73) Patentinhaber: Kalt Maschinenbau AG, 9604 Lütisburg (CH)
(72) Erfinder: Huser, Jakob, 9607 Mosnang (CH)
(74) Vertreter: Stocker, Kurt

(56) Entgegenhaltungen:
- EP-A- 0 350 777
- EP-A- 0 565 829
- DE-C- 922 448
- FR-A- 2 302 029
- FR-A- 2 315 230

## Beschreibung

Die Erfindung bezieht sich auf ein Verfahren zum Herstellen eines Käselaibes nach dem Oberbegriff des Anspruches 1.

Ein derartiges Verfahren ist beispielsweise aus der EP-B1-0 565 829 bekannt geworden. Dabei verwendet man ein nach Fertigstellung eines Käselaibes - ähnlich einer Springform beim Tortenbacken - zu öffnenden Siebwickel, um den Käselaib aus dem Inneren des Siebes zu lösen. Dies erfordert natürlich eine gewisse Manipulation, weil das Sieb herausgenommen, aufgerollt oder sonstwie geöffnet, der Käselaib herausgenommen, dann das Sieb wieder zusammengewickelt und in die Käseform gut passend gesteckt werden muss, bevor ein neuer Bearbeitungsvorgang stattfinden kann. Diese Handhabungen stehen naturgemäss einer automatischen Verarbeitung sehr entgegen, weil die Handhabung des auf- und zusammenrollbaren Siebes nur schwer automatisierbar ist und tatsächlich auch bisher nicht durchgeführt wurde.

Der Erfindung liegt daher die Aufgabe zugrunde, wenigstens einen Teil der Handhabungen, welche herkömmlich zum Entnehmen des Käselaibes manuell durchgeführt werden mussten, einer Automatisierung zugänglich zu machen. Dies gelingt erfindungsgemäss durch die Merkmale des Kennzeichens des Anspruches 1.

Im Rahmen der Erfindung sind nun zwei Vorgehensweisen denkbar: Entweder erfolgt das Herauslösen des Käselaibes aus dem Sieb ausschliesslich pneumatisch durch pneumatisches Herausschieben, gegebenenfalls unter Mitwirkung der Schwerkraft von oben nach unten. Oder die Luft wird nur zum Lösen des Käselaibes von den Seitenwänden des Siebes, den sogenannten Jerbwänden, verwendet, wogegen das Herausschieben, gegebenenfalls von unten nach oben, mittels eines mechanischen Pressteiles, wie des Pressbodens, erfolgt. Welche Vorgehensweise zum Herstellen eines Käselaibes aus einer Käsemasse gewählt wird, hängt von der Art des Käses, der Grösse des Käselaibes und seiner Konsistenz ab.

Zur Durchführung dieses Verfahrens eignet sich am besten eine Vorrichtung mit den Merkmalen des Anspruches 4.

Weitere Einzelheiten der Erfindung ergeben sich aus der nachfolgenden Beschreibung von in der Zeichnung schematisch veranschaulichten Ausführungsbeispielen.
- Fig. 1: veranschaulicht den Verfahrensablauf gemäss einem ersten Ausführungsbeispiel der Erfindung, zu dem im Vergleich die
- Fig. 2: den Verfahrensablauf nach dem Stande der Technik darstellt, wogegen
- Fig. 3: ein bevorzugtes Ausführungsbeispiel nach der Erfindung ist;
- Fig. 4: zeigt eine vergrösserte Darstellung der in eine Pressform eingesetzten Siebes, welches in
- Fig. 5: alleine dargestellt ist.

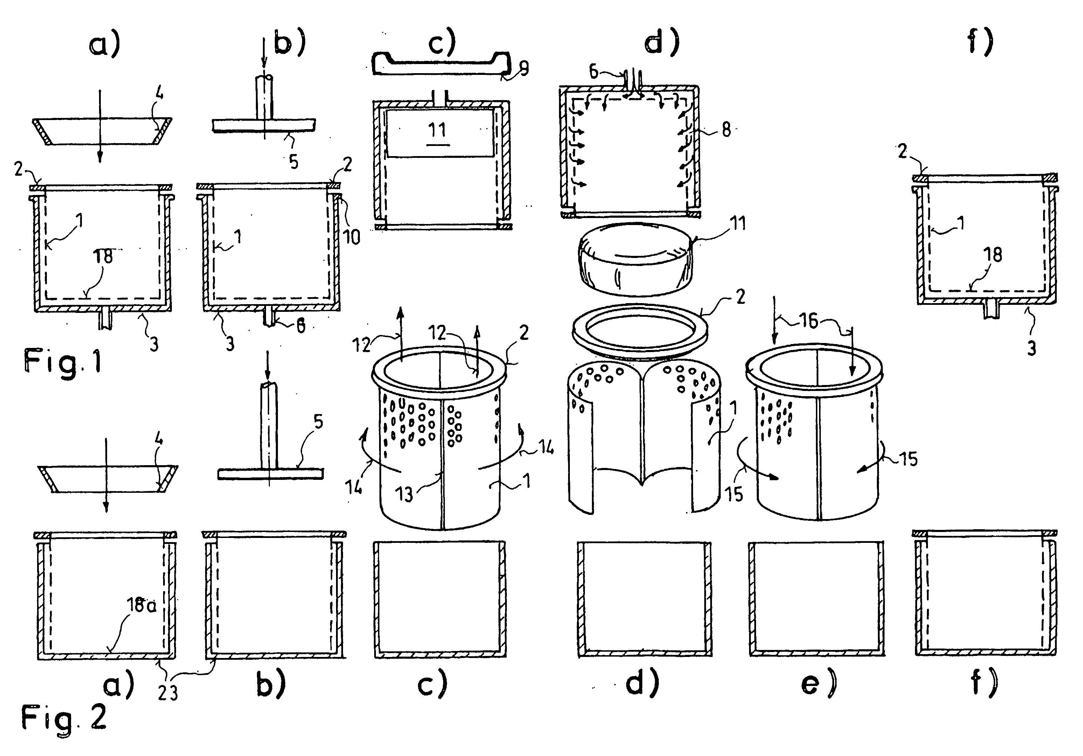

Gemäss Fig. 1 sind fünf Verfahrensschritte a) bis d) und f) vorgesehen. Zunächst wird eine gelochte Pressform1, welche an ihrem oberen Ende einen Bund 2 aufweist, in einen ungelochten Mantel 3 eingesetzt. Der Mantel 3 ist hier als über die volle Höhe der Pressform 1 verlaufend gezeigt, doch ist dies in der Preaxis nicht erforderlich. Wie später erläutert wird, dient nämlich dieser Mantel 3 zur Bildung von Luftkanälen (oder Gaskanälen), um die gepresste und daher an den Sieblöchem der Pressform 1 fest anhaftende Käsemasse nach dem Pressen von der Jerbseite (der Siebumfangsseite), gegebenenfalls auch von der Stirnseite, abzulösen. Daher brächte der Mantel 3 eigentlich nur etwa die Höhe des fertigen Käselaibes besitzen und nur jene Höhe der gelochten Pressform 1 umgeben, über welche Luft eingeblasen wird. Daraus ist ersichtlich, dass die axiale Höhe des Mantels 3 im allgemeinen nicht kritisch ist, doch wird er im allgemeinen eng und reibungsschlüssig am Sieb der Pressform 1 anliegen.

In diese Pressform 1 wird nun - beispielsweise entsprechend der EP-0 350 777 - Käsemasse, z.B. über einen Trichter 4, eingefüllt (Schritt a). Sobald die gewünschte Menge an Käsemasse in die Pressform 1 gefüllt worden ist, wird ein Pressstempel 5 (vgl. die schon genannte EP-0 350 777) von oben her in Bewegung gesetzt, um die Käsemasse in der Pressform 1 derart zu pressen, dass Flüssigbestandteile über die Löcher des Siebes 1 austreten (Schritt b). Für den Abfluss dieser flüssigen Komponenten ist entweder eine gesonderte, nicht dargestellte Leitung vorgesehen, oder sie verbleibt im Mantel 3, oder sie zieht über eine Leitung 6 am Boden der Pressform 3 ab.

Die Leitung 6 kann in diesem letzteren Fall umschaltbar sein, um wahlweise die Flüssigkeit über einen Pfad abzulassen und - nach Umschaltung eines Wegeventils - den Weg zu einer (nicht dargestellten) Druckluftquelle freizugeben, deren letzter Teil eben die Leitung 6 ist. Denn sobald die Käsemasse in entsprechender Weise - d.h. gegebenenfalls entsprechend der EP-0 350 777, deren Inhalt im Rahmen dieser Beschreibung als geoffenbart gelten soll - in gewünschter Weise (im allgemeinen mehrmals und, gemäss der EP-0 350 777 unter Wenden der Pressform 3) gepresst ist, wäre an sich der Käselaib fertig und müsste nur der Pressform 1 entnommen werden.

Um dies zu bewerkstelligen, kann im Schritt c) der in der Pressform 1 befindliche Käselaib durch Einblasen von Luft (oder einem anderen Gas) hochgedrückt werden, so dass beispielsweise ein Greifer ihn oberhalb der Pressform 1 ergreifen kann. Dazu besitzt der Mantel 3 nach Fig. 1 die schon erwähnte Einlassleitung 6 für ein Gas. Das Gas kann an sich ein Inertgas, wie Stickstoff, sein, wird aber der Einfachheit halber in der Regel Luft sein. Wie ersichtlich, ergeben sich im Randbereich zwischen Pressform 1 und Mantel 3 in der später beschriebenen Weise Kanäle 8, durch die sich die eingeblasene, im allgemeinen unter einem gewissen Druck stehende Luft verteilen kann. Wegen des Strömungswiderstandes in diesen Kanälen 8 baut sich im Inneren der Kanäle 8 ein Druck auf, welcher dazu führt, dass die in der gelochten Pressform 1 befindliche Käsemasse von den Innenflächen des Siebes 1 abgedrückt und von diesen Flächen gelöst wird.

Ein Deckel 9 ist in Fig. 1 derart dargestellt, dass er sowohl den Bund 2, als auch einen sich dazu parallel erstreckenden flanschartigen Rand 10 der Pressform 3 erfasst. Dies könnte beispielsweise nach Art eines Bajonettverschlusses geschehen, wird aber im allgemeinen nicht erforderlich sein, da es ja genügt, wenn das Sieb 1 vom Deckel 9 abgedeckt wird, so dass es ausreicht, diesen Deckel 9 mit dem Bund 2 zu verbinden. Auch könnte dieser Deckel 9 zur Erhöhung des Druckes in den Kanälen 8 auch diese abdekken, doch ist dies im allgemeinen nicht erforderlich. Gegebenenfalls kann der Deckel 9 überhaupt entfallen.

Einfacher ist eine andere Möglichkeit, nämlich, wie veranschaulicht, die Wendevorrichtung, welche gemäss der EP-0 350 777 sowieso vorhanden sein wird, dazu zu nutzen, die Pressform 1 samt dem darin gebildeten Käselaib 11 nach Abnahme des Deckels 9 (in einer Kassette, zusammen mit anderen Pressformen) zu wenden, so dass ihre Öffnung nach unten gerichtet ist, wie dies im Schritt c) der Fig. 1 dargestellt ist. Da die Masse des Käselaibes 11 an und in den Sieblöchem der Pressform 1 anhaftet, wird dieses Wenden in der Regel nicht ausreichen, um den Käse durch sein Eigengewicht aus der Pressform 1 fallen zu lassen. Wohl aber löst sich der Käselaib 11 mit Sicherheit dann, wenn in dieser Situation (Schritt d) Luft (oder Gas) über die Leitung 6 von oben her eingeblasen wird, so dass sich die Jerbwand des Käselaibes 11 von den Siebflächen löst.

Wenn man davon ausgeht, dass all diese Vorgänge in einer Käsepresse, etwa gemäss der EP-0 350 777, stattfinden, so kann eine solche Käsepresse auch mit einer Lufteinlassstation mit einer der Anzahl der Pressformen entsprechenden Anzahl von Luftdüsen vorgesehen sein, welche an die Leitungsstutzen 6 angekuppelt werden. Dann ist es eine Frage der Grösse bzw. Höhe des Käselaibs, ob alle Düsen gleichzeitig, nur jeweils eine Gruppe von Ihnen oder überhaupt über entsprechende Schalter jeweils nur eine Düse mit Luft versorgt wird, um den Druck nicht zu sehr abfallen zu lassen.

Anschliessend wird die Pressform 3 wieder in ihre ursprüngliche Lage mit der Öffnung nach oben gebracht (Schritt f) und ist für einen neuen Verfahrensablauf bereit. Der Käselaib 11 muss im Rahmen der Erfindung nicht unbedingt rund sein, sondern kann jede beliebige Gestalt haben, beispielsweise eine vier- oder mehreckige.

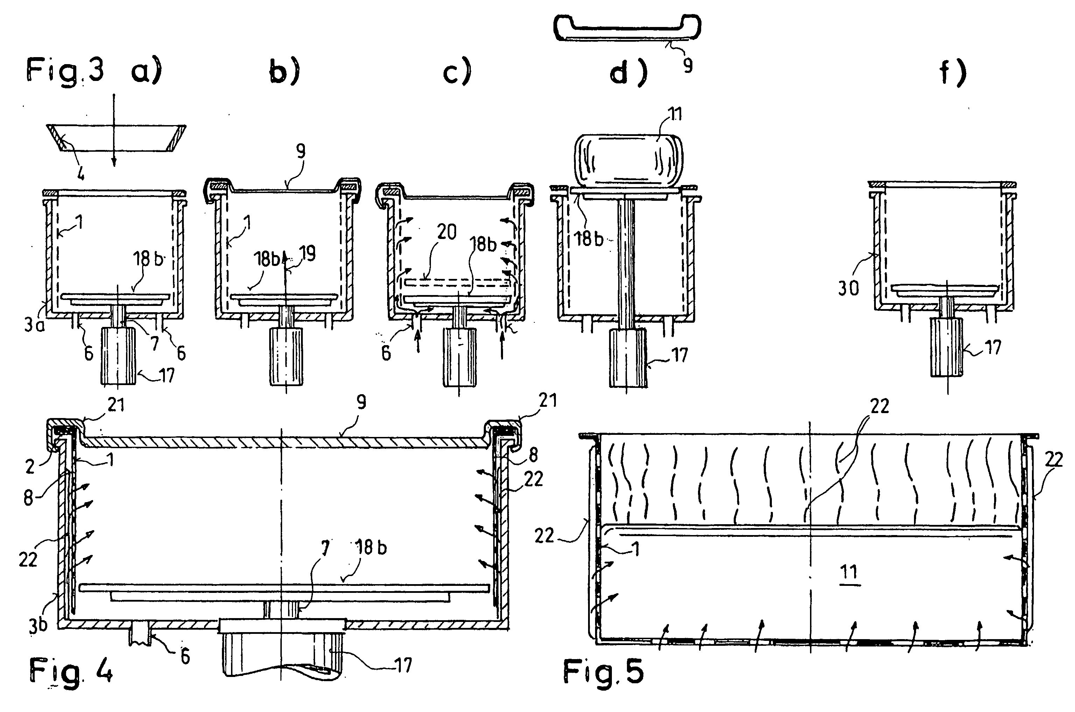

Aus den obigen Erläuterungen ergibt sich, dass der gesamte, eben beschriebene Verfahrensablauf ohne weiteres automatisch ablaufen kann, weil an sich keine manuellen Handhabungen nötig wären. Solche Handhabungen sind aber dann erforderlich, wenn nach dem Stande der Technik vorgegangen wird, wie nachstehend an Hand der Fig. 2 veranschaulicht wird.

Die herkömmlichen Verfahrensschritte a) und b) gemäss Fig. 2 unterscheiden sich von den erfindungsgemässen Schritten a) und b) nach Fig. 1 im allgemeinen nicht wesentlich. Mehrere Pressformen 1 sind hintereinander in einer etwa die Form eines rechteckigen Prismas aufweisenden Kassette 23 (in Fig. 2 ist ein Schnitt durch die Breitseite der Kassette 23 dargestellt) angeordnet. Ist jedoch der Pressvorgang einmal beendet, so enthält die Pressform 1 - die hier mit Rundlöchem gezeichnet ist, oft aber Schlitzlöcher aufweist - den an sich fertigen Käse, und es ergibt sich die Frage, wie man diesen entnimmt. Dies wird herkömmlich so gelöst, dass der oben das Sieb 1 zusammenhaltende Bund 2 abgenommen wird (Pfeil 12). Da das Sieb 1 entlang einer Teilungskante 13 auseinanderfaltbar ist, werden die zu beiden Seiten der Teilungslinie 13 liegenden Abschnitte des Siebes 1 im Sinne der Pfeile 14 auseinandergebogen (Schritt c).

Man erhält so die Situation, welche in Fig. 2 an Hand des Schrittes d) dargestellt ist. Das bedeutet, dass entweder die Elastizität des Siebbleches ausgenützt wird, so dass sich das Sieb 1 in die Lage biegt, die im Schritt d) festgehalten ist, oder das Sieb weist an der Rückseite ein Scharnier nach Art einer Springform auf. In letzterem Fall wird das Siebblech zwar weniger beansprucht, doch lässt sich anderseits im Bereiche des Scharniers keine Lochung anbringen, was ein Nachteil sein mag. Jedenfalls lässt sich der jeweilige Käselaib in dieser Situation leicht aus der Pressform 1 entnehmen.

Anschliessend muss aber das Sieb wieder im Sinne der Pfeile 15 zusammengefügt und durch den aufgesetzten Bund 2 (Pfeile 16) zusammengehalten werden (Schritt e). Dies bedeutet, dass die Schritte c) bis e) einerseits einer manuellen Handhabung bedürfen und anderseits durch das Hinzutreten des Schrittes e) (im Vergleich zum Verfahrensablauf nach Fig. 1) auch noch im Ablauf arbeitsaufwendiger sind. Erst wenn der Schritt e) getan ist, kann die Pressform 1 wieder in die Kassette 23 gesteckt werden, und es ergibt sich die Situation nach Verfahrensschritt f) in derselben Weise wie erfindungsgemäss nach Fig. 1. Hier zeigt sich also, dass erfindungsgemäss das Hantieren mit dem Sieb 1 unterbleiben kann.

Ein weiterer Unterschied zwischen der erfindungsgemässen Vorgangsweise nach Fig. 1 und der herkömmlichen nach Fig. 2 liegt darin, dass die Pressform 1 nach Fig. 1 einen Siebboden 18 besitzen kann (wenn auch nicht muss), das Sieb nach dem herkömmlichen Verfahren jedoch zwangsläufig unten offen sein muss, was nicht immer von Vorteil ist. Dies bedeutet, dass im Falle der Fig. 1 der Siebboden des Siebes 1 die Rolle eines Pressbodens 18 hat, da er im Schritt b) die durch den Pressstempel 5 aufgebrachten Druck aufnehmen muss.

Bei der Ausführungsform nach Fig. 3 wird ein besonderer Mantel 3a verwendet, welcher ausser der mindestens einen (hier sind zwei dargestellt) Einlassleitung 6 auch einen Durchlass für die Kolbenstange 7 eines Zylinderaggregates 17 aufweist. Am oberen Ende der Kolbenstange 7 ist ein aufwärts mit Hilfe der Kolbenstange 7 beweglicher Pressboden 18b befestigt, dessen Durchmesser geringfügig kleiner ist als der Innendurchmesser der Pressform 1.

Nach dem Befüllen der Pressform 1 im Schritt a), erfolgt im Schritt b) das Pressen der im Sieb 1 befindlichen Käsemasse, diesmal jedoch von unten und mit Hilfe eines kolbenartigen beweglichen Pressbodens 18b (Pfeil 19). Um einen Gegendruck herbeizuführen, wird in diesem Fall der schon aus der Fig. 1 bekannte Deckel 9 über dem Sieb 1 bzw. an ihm befestigt. Natürlich wäre es auch denkbar, sowohl von oben als auch von unten zu pressen, doch erfordert dies eine aufwendigere Konstruktion.

Der anschliessende Schritt c) umfasst, wie im Falle der Fig. 1, wiederum das Einlassen eines Gases, wie Luft, über die Leitungen 6, so dass sie mindestens von der Umfangsseite her in das Sieb 1 eindringen kann und den Käse an der sogenannten Jerbseite vom Sieb 1 ablöst. Der Pressboden 18b, der im Schritt b) noch eine gewisse Höhe aufwärts verschoben worden ist, kann während des Schrittes c) in dieser Höhe verbleiben, wie in Fig. 3 strichliert bei 20 angedeutet ist, er kann jedoch auch wieder in die mit vollen Linien gezeigte Lage abgesenkt werden. Es mag vorteilhaft sein, auch den Pressboden 18b mit Löchern, wie Schlitzlöchern, zu versehen (ähnlich dem Pressboden 18 der Fig. 1), um auch von dort her ein Ablösen der Käsemasse von der oberen Fläche des Pressbodens 18b zu bewirken.

In vorteilhafter Weise kann anschliessend, im Schritt d), der Pressboden 18b zum Ausstossen des fertigen Käselaibes 11 verwendet werden, so dass eine eigene Einrichtung hierfür entbehrlich ist und der Vorgang überdies auch noch beschleunigt wird. In diesem Fall wird der Pressboden 18b mit Hilfe des Zylinderaggregates 17 wieder in die untere Lage geführt (Schritt f), sobald der Käselaib 11 entnommen wurde. Es ist jedoch ebenso möglich, wie dies schon als Variante zur Fig. 1 beschrieben wurde, den Käselaib 11 einfach in aufrechter Position der Pressform 1 herauszublasen. Schliesslich sind auch Kombinationen in der Form denkbar, dass zunächst der Käselaib 11 von den Siebflächen der Pressform gelöst und - unterstützt von einem leicht aufwärts bewegten Pressboden 18b - herausgeblasen wird. Wenn dann der Pressboden 18b mittels des Zylinderaggregates 17 abgesenkt worden ist (Schritt f), ist die Pressform 3a für einen neuen Verfahrensablauf wiederum bereit.

In Fig. 4 ist die Anordnung mit einem Mantel 3b in grösserem Massstabe dargestellt. Man sieht, dass der Pressdeckel 9 im wesentlichen scheibenförmig ist und mit über seinen Umfang verteilten Klammern 21 am Bund 2 der Pressform 1 festgehalten wird. Man sieht hier auch, dass der Mantel 3b in diesem Falle nur über einen Teil der axialen Höhe der Pressform 1 reicht, wobei es wenig Rolle spielt, wenn ein Teil der eingeblasenen Luft, soweit diese nicht schon vorher in die Sieblöcher der Pressform 1 eingedrungen ist, an der Oberseite entweicht. Nötigenfalls kann hier der Mantel 3b gegenüber der gelochten Pressform 1 auch noch eine Abdichtung besitzen, was jedoch in der Praxis kaum erforderlich sein wird.

Die Fig. 4 zeigt im übrigen, dass es denkbar wäre, das Zylinderaggregat 17 unmittelbar an der Pressform 3b zu befestigen, was Dichtungsprobleme vermeiden hilft, wenngleich diese auch im Falle der blossen Hindurchführung der sich bewegenden Kolbenstange 7 (vgl. Fig. 3) nicht allzu gross sein werden.

Um die seitlichen Kanäle 8 zu bilden, weist die Pressform 1 an ihrer Aussenseite eine leichte Wellung auf, welche Vorsprünge 22 bildet. Diese Wellung ist noch besser in Fig. 5 zu sehen. Natürlich wäre es alternativ oder zusätzlich möglich, solche Abstandhalter 22 an der Innenseite des Mantels 3b anzubringen. Auch wäre es denkbar, die Abstandhalter durch eine zweite, um eine innere, den Käse aufnehmende Sieblage herumgeführte und zweckmässig von der inneren Sieblage auf Abstand gehaltene äussere Sieblage zu bilden, doch wird dies im allgemeinen nicht bevorzugt sein.

Es ist ersichtlich, dass die Erfindung zahlreiche Varianten umfassen kann und nicht auf die dargestellten Ausführungsbeispiele beschränkt ist. Beispielsweise ergeben sich Kanäle zum Einblasen von Luft bei Anordnung des Siebes (mit anderen) in einer grösseren Kassette automatisch, so dass die Vorsprünge 22 gar nicht erforderlich sind. Ferner ergeben die Wellung mit den Vorsprünge 22 zwar eine grosse Anzahl von Kanälen 8 rund um die Pressform 1, doch könnte ein einziger Ringkanal ausreichend sein.

## Patentansprüche

1. Verfahren zum Herstellen eines Käselaibes aus einer Käsemasse, bei welchem die Käsemasse in eine gelochte Pressform (1) eingefüllt, in der die Käsemasse durch mindestens einen kolbenartigen Teil (5; 18b) gepresst wird, **dadurch gekennzeichnet, dass** als Pressform (1) ein im wesentlichen geschlossenes, etwa zylinder- oder prismenförmiges Sieb verwendet wird, das wenigstens über einen Teil seiner axialen Höhe von einem ungelochten Mantel umgeben ist, und dass der Käselaib (11) nach dem Pressen dadurch aus der Pressform (1) herauslösbar ist, dass zwischen Pressform (1) und Mantel (3; 3a; 3b) durch mindestens einen Kanal (8) ein Gas zum Ablösen des Käselaibes (11) von der inneren Siebfläche der Pressform (1) bzw. Jerbseite hindurchgeblasen wird, so dass eine Beschädigung der Aussenfläche des Käselaibes (11) vermieden ist.

2. Verfahren nach Anspruch 1, **dadurch gekennzeichnet, dass** nach dem Einblasen von Gas zum Ablösen des Käselaibes (11) von der inneren Siebfläche bzw. Jerbseite der kolbenartige Teil (18b) zum Herausführen des Käselaibes (11) aus der Pressform (1) bewegt wird.

3. Verfahren nach einem der vorhergehenden Ansprüche, **dadurch gekennzeichnet, dass** das Herauslösen des Käselaibes (11) mittels Gas und/oder einem Pressteil (8b) von oben nach unten hin erfolgt, gegebenenfalls Pressform (3) und Sieb (1) entsprechend gewendet werden (Fig. 1).

4. Vorrichtung zur Durchführung des Verfahrens nach einem der vorhergehenden Ansprüche, mit einer gelochten Pressform (1), welcher ein kolbenartiger Teil (5; 18b) zum Pressen von in die Pressform eingefüllter Käsemasse zugeordnet ist, der durch eine Antriebseinrichtung (17) in Pressrichtung bewegbar ist, **dadurch gekennzeichnet, dass** zumindest zwischen dem Umfang der Pressform (1) und einem sie mindestens teilweise umgebenden ungelochten Mantel (3; 3a; 3b) jeweils mindestens ein Luftkanal (8) vorgesehen ist, und dass an der Pressform (3; 3a) mindestens ein Luftanschluss (6) zur Zufuhr von Pressluft angeordnet ist.

5. Vorrichtung nach Anspruch 4, **dadurch gekennzeichnet, dass** der mindestens eine Kanal (8) durch entsprechende Vorsprünge (22) bzw. Vertiefungen als Abstandhalter gebildet ist.

6. Vorrichtung nach Anspruch 5, **dadurch gekennzeichnet, dass** die Vorsprünge (22) bzw. Vertiefungen an der Pressform (1) ausgebildet sind.

7. Vorrichtung nach einem der Ansprüche 4 bis 6, **dadurch gekennzeichnet, dass** der, vorzugsweise von unterhalb der Pressform (1) in diese eindringende, kolbenartige Teil (18b) mit Sieböffnungen ausgebildet ist.

## Claims

1. Process for producing a cheese loaf from a cheese mass, in which the cheese mass is charged into a perforated pressing mould (1) in which the cheese mass is pressed through at least one piston-shaped part (5; 18b), **characterized in that** the pressing mould (1) used is an essentially closed, roughly cylindrical or prism-shaped screen which is enclosed at least over a part of its axial height by an unperforated shell, and that the cheese loaf (11) after pressing is detachable from the pressing mould (1) by blowing between pressing mould (1) and shell (3; 3a; 3b) a gas through at least one channel (8) for detaching the cheese loaf (11) from the inner screen surface of the pressing mould (1) of the pressing hoop side, so that damage to the outside of the cheese loaf (11) is avoided.

2. Method according to Claim 1, **characterized in that**, after blowing in gas for detaching the cheese loaf (11) from the inner screen surface or pressing hoop side, the piston-shaped part (18b) is moved out of the pressing mould (1) to convey out the cheese loaf (11).

3. Process according to one of the preceding claims, **characterized in that** the cheese loaf (11) is detached by means of gas and/or a pressing part (8b) from top to bottom, if appropriate pressing mould (3) and screen (1) being turned in accordance (Fig. 1).

4. Apparatus for carrying out the process according to one of the preceding claims, having a perforated pressing mould (1) to which is assigned a piston-shaped part (5; 18b) for pressing cheese mass charged into the pressing mould, which part can be moved by a drive device (17) in the pressing direction, **characterized in that** at least between the surround of the pressing mould (1) and an unperforated shell (3; 3a; 3b) at least in part enclosing it in each case at least one air channel (8) is provided, and **in that** at least one air connection (6) for feeding compressed air is deposed on the pressing mould (3; 3a).

5. Apparatus according to Claim 4, **characterized in that** the at least one channel (8) is formed by corresponding projections (22) and recesses as spacers.

6. Apparatus according to Claim 5, **characterized in that** the projections (22) and recesses are formed on the pressing mould (1).

7. Apparatus according to one of Claims 4 to 6, **characterized in that** the piston-shaped part (18b), which preferably penetrates into the pressing mould (1) from beneath this, is formed with screen orifices.

## Revendications

1. Procédé pour former un bloc de fromage à partir d'un caillé, dans lequel le caillé est mis dans un moule de pressage (1) présentant des perforations, et dans lequel le caillé est pressé par au moins un élément du type piston (5 ; 18b), **caractérisé en ce que** le moule de pressage (1) est constituée par un. tamis qui est sensiblement fermé, qui a une forme soit cylindrique, soit prismatique et qui est entouré, sur au moins une partie de sa hauteur axiale, par une cuvette sans perforations, **en ce que** le bloc de fromage (11) après le pressage peut être détaché du moule de pressage (1), et **en ce qu**'entre le moule de pressage (1) et la cuvette (3 ; 3a ; 3b), un gaz est insufflé par au moins un canal (8) pour détacher le bloc de fromage (11) ou son coté latéral de la surface interne du tamis du moule de pressage (1), ce qui évite une détérioration de la surface externe du bloc de fromage (11).

2. Procédé selon la revendication 1, **caractérisé en ce qu'**après l'injection de gaz pour détacher le bloc de fromage (11) et en particulier ses côtés latéraux, de la surface interne du tamis, l'élément de type piston (18b) est déplacé pour sortir le bloc de fromage (11) hors du moule de pressage (1).

3. Procédé selon l'une des revendications précédentes, **caractérisé en ce que** le démoulage du bloc de fromage (11) à l'aide d'un gaz et / ou d'un élément de pressage (8b) se fait depuis le haut vers le bas, en utilisant, le cas échéant, un moule de pressage (3) et un tamis (1) adaptés.

4. Dispositif pour mettre en oeuvre le procédé, selon l'une des revendications précédentes, avec un moule de pressage (1) comportant des orifices, qui est équipé d'un élément de type piston (5 ; 18b) pour presser le caillé remplissant le moule de pressage et qui peut être déplacé dans la direction de pressage par une installation d'actionnement (17), **caractérisé en ce qu**'au moins entre la périphérie du moule de pressage (1) et une cuvette (3 ; 3a ; 3b) sans perforations l'entourant au moins partiellement, on prévoit au moins un canal à air (8) et **en ce que** sur le moule de pressage (3 ; 3a), il y a au moins un raccord à air (6) pour permettre une alimentation en air sous pression.

5. Procédé selon la revendication 4, **caractérisé en ce qu'**au moins un canal (8) est réalisé en prévoyant des éléments saillants appropriés (22) ou des creusures, comme éléments d'espacement.

6. Procédé selon la revendication 5, **caractérisé en ce que** les éléments saillants (22) ou les creusures sont formés sur le moule de pressage (1).

7. Procédé selon l'une des revendications 4 à 6, **caractérisé en ce qu'**un élément de type piston (18b) qui pénètre dans le moule de pressage (1), de préférence depuis le bas, est réalisé avec des perforations.
